# EUROPEAN PATENT APPLICATION

(11) **EP 4 811 055 A1**
(43) Date of publication of application: **23.09.2026**
(21) Application number: 25165365.5
(22) Date of filing: 21.03.2025
(51) Int. Cl.: G05B 19/042, G05B 19/418

(54) **TECHNIQUES FOR INTEGRATION OF INTELLIGENT ELECTRONIC DEVICES, IEDS**

(71) Applicant: Siemens Aktiengesellschaft, 80333 München (DE)
(72) Inventor: Kniphoff da Cruz, Arthur, 76187 Karlsruhe (DE); Lechner, Daniel, 76135 Karlsruhe (DE); Müller, Tobias, 76351 Linkenheim-Hochstetten (DE)
(74) Representative: Siemens Patent Attorneys

(57) **Abstract**

A method of integrating an intelligent electronic device, IED, controlling a power system equipment, such as a circuit breaker, a transformer, and/or a capacitor bank, into a control application on an application layer of a control system, the method comprising the steps of: determining a template from a plurality of function unit templates based on a configuration of the IED in a first modelling language, wherein the function unit templates represent different types of IEDs and comprise variables for controlling and/or monitoring of a respective IED type in the form of one or more services, and wherein the template encapsulates template elements representing an application layer information model of the respective IED type in a second modelling language, and filling the template based on the configuration of the IED by assigning values to the template elements based on the configuration, and creating a function unit file in a third modelling language based on the filled template, wherein the function unit file is interpretable by the control application, and comprises the services encapsulated in said third modelling language.

## Description

### TECHNICAL FIELD

The present disclosure relates to technical facilities, such as automation systems, and in particular process automation systems, and their control. In particular, the present invention relates to modularly buildable automation systems, that comprise process equipment control as well as power equipment control.

### BACKGROUND

*Independent of the grammatical term usage, individuals with male, female or other gender identities are included within the term.*

Substation automation, SA, refers to obtaining information or data from intelligent electronic devices, IEDs, control and automation capabilities within the substation, and control commands from remote users to control power system devices, i.e. power equipment. This enables the to remotely monitor, control and/or coordinate the power equipment installed in the substation.

The use of substation supervisory control and data acquisition, SCADA, is one of the key points on the power grid automation improving its monitoring and control capabilities, and is based data collected from the substation, like the intelligent electronic devices, IEDs, Remote Terminal Units, RTUs, and SCADA.

### SUMMARY

Supervisory Control and Data Acquisition, SCADA, and Edge systems are used in different sectors of the factory and process industries. A big part of the use cases is dedicated partially or completely to the control of the energy distribution in plants dedicated to industrial processes, e.g., process automation, or just for the energy sector. The heart of the energy distribution plants is the electrical substation and the International Electrotechnical Commission (IEC) 61850 is the established standard for its communication design, allowing the interoperability between the substation components. Although the standard allows interoperability, the integration and modularization of the bay level components into the station level (SCADA/Edge systems) can be optimized, since there is no modern standard procedure for integrating and easily managing the bay level components into the substation station level, i.e. into different layers and/or units of reference models for Industry 4.0, I4.0, like the Process Orchestration Layer, POL.

According to a first aspect, a method of integrating an intelligent electronic device, IED, controlling a power system equipment, such as a circuit breaker, a transformer, and/or a capacitor bank, into a control application on an application layer of a control system is proposed. The method comprising the steps of determining a template from a plurality of function unit templates based on a configuration of the IED in a first modelling language, wherein the function unit templates represent different types of IEDs and comprise variables for controlling and/or monitoring of a respective IED type in the form of one or more services, and wherein the template encapsulates template elements representing an application layer information model of the respective IED type in a second modelling language (OPC UA/UML), and filling the template based on the configuration of the IED by assigning values to the template elements based on the configuration, and creating a function unit file in a third modelling language based on the filled template, wherein the function unit file is interpretable by the control application, and comprises the services encapsulated in said third modelling language.

According to a second aspect, a computer program, e.g., an engineering tool, operative to perform the method steps of the first aspect is proposed.

According to a third aspect, an apparatus, preferably comprising the computer program according to the preceding aspect, operative to perform the method steps of the first aspect is proposed.

According to a fourth aspect, a system comprising a control program and/or one or more peripheral devices comprising a function unit configured based on a function unit file obtained according to the first aspect, preferably for controlling and/or monitoring one or more IEDs, is proposed.

Thus, inter alia, it is proposed herein to map an IED configuration, e.g., according to IEC 61850, into an information model, such as Open Platform Communication Unified Architecture, OPC UA, for example, by using the communication OPC UA client-server, CS. As an embodiment the mapping of Generic Object-Oriented Substation Event, GOOSE, into OPC UA publish-subscribe, PubSub, e.g., over Time-Sensitive Networking, TSN, will be presented. To manage bay level components in modern station level systems, it is proposed to map of P&C, Protection and Control, Intelligent Electronic Devices, IEDs, into function units, such as Modular Type Packages, MTP. To that end, it is proposed to categorize IED devices into different types and to provide a template for each one of these types. As an example, the modularization of a feeder system will be presented.

### BRIEF DESCRIPTION OF THE DRAWINGS

Fig. 1: Automation pyramid according to ISA-95
Fig. 2: Electrical substation architecture based on IEC 61850
Fig. 3: Data model of the standard IEC 61850
Fig. 4: OSI/RM mapping of the IEC 61850 protocols
Fig. 5: IEC 61850 data model representation in OPC UA
Fig. 6: Hierarchical structure of modular plants
Fig. 7: Station Gateway OSI/RM layers
Fig. 8: Filling in a feeder MTP skeleton and services
Fig. 9: Mapping bay level in MTP - Network topology
Fig. 10: GOOSE transmission interval Tx
Fig. 11: Layout of the VLAN-tagged Ethernet frame
Fig. 12: Base fields of a feeder object and faceplate of a feeder MTP
Fig. 13 and 14: exemplary method steps
Fig. 15: an (integrated) process control system and station control system

### DETAILED DESCRIPTION

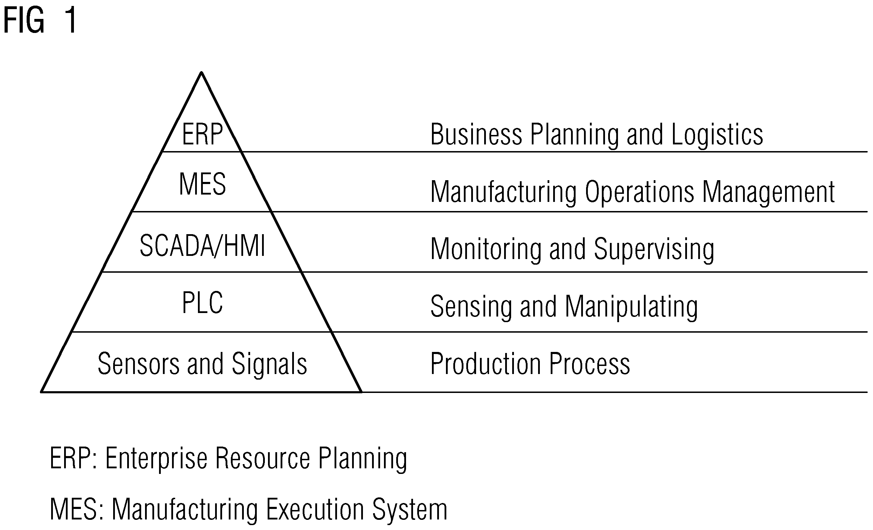

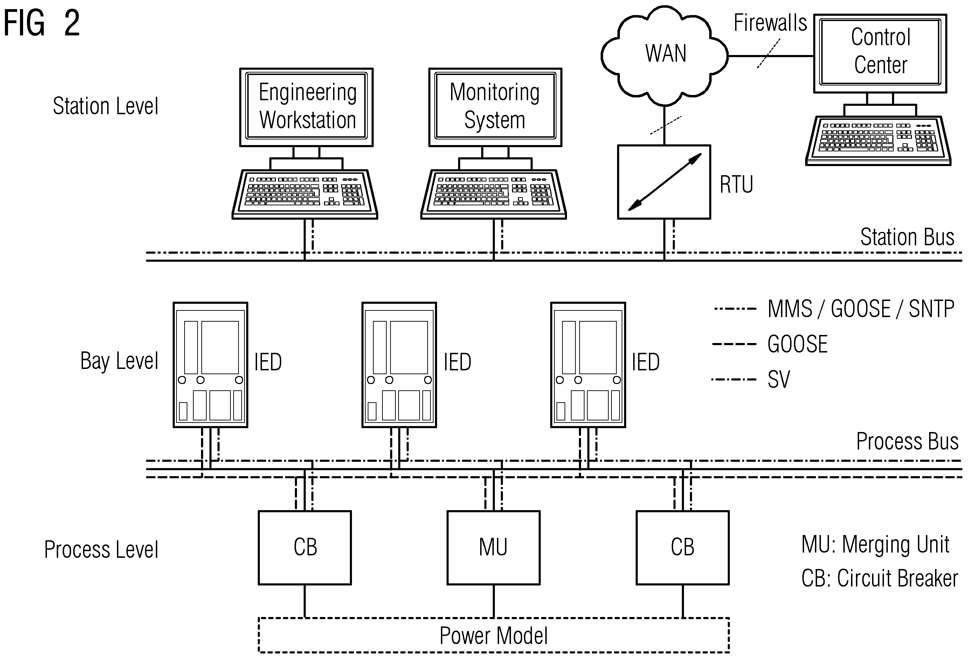

In highly competitive markets companies are required to produce smaller and more diverse assortments, forging the level of communication, integration and organization to be more complex and real-time, RT, as well as decentralized-decision dependent. Associated with this, is the ability to grow and the offered efficiency and flexibility provided by new plug-and-play systems to communicate with legacy systems, while simultaneously using global standards. Addressing the challenges for standardized systems architectures for I4.0, different reference models were proposed, such as the American Industrial Internet Reference Architecture, IIRA, and the German Reference Architecture Model Industrie 4.0, RAMI 4.0. IIRA uses the viewpoints of business, usage, functional, and implementation to provide a framework for ensuring interoperability and connectivity, framing global orchestration and collaborative autonomy for Industrial Internet of Things, IloT, systems. On the other hand, RAMI 4.0 introduces a systematic structure to describe the key components of an asset, including architecture layers, hierarchy levels, and life cycle management, enabling a comprehensive integration of physical and digital systems in an industrial context (DIN SPEC, 2016). Despite the emergence and continuous development of new reference models, the content of the different layers of the classic pyramid model shown in Fig. 1, defined in International Society of Automation (ISA)-95, that proposes a hierarchical information flow between the different layers of the manufacturing and process control operations, will continue to exist in an integrated manner in the new frameworks. The continuous change proposals directly impact the communication and automation part of electrical substations. The classical topology of an electrical substation based on IEC 61850, presented in Fig. 2, resembles the layers of the pyramid shown in Fig. 1. Electrical substations work as a core component of the power grid. From a classical industry perspective, small, medium, and large industrial plants almost always involve significant electrical loads, necessitating an electrical substation with P&C IEDs, Circuit Breaker, CB, IEDs and Merging Unit, MU, IEDs for energy distribution.

In traditional energy sector plants, the same control systems used in (classical) process industry are typically employed for electrical substation control. IEC 61850, established as international standard for the design of the electrical substation automation, issued by the IEC TC 57, Technical Committee 57, describes the information model, the communication services and the architecture of the substation, allowing interoperability between the components. To provide interoperability, IEC 61850 defines an universal data model and an universal language for substation configuration. The IEC 61850 Substation Configuration Language, SCL, includes a logical and abstract representation of the substation components, allowing a single interpretation of the exchanged information and the system architecture.

To address the challenges of meeting the requirements of various framework models for I4.0, the use of protocols such as OPC UA has emerged since 2011. OPC UA fits with the requirements as it provides standardized, platform-independent, and secure machine-to-machine communication, closing the gap between Operational Technology, OT, and Information Technology, IT. Consequently, the OPC UA protocol is "future proof" as it relies on a multilayered architecture allowing vertical and horizontal interoperability. For this reason, the use of communication protocols in modern control systems tends to converge towards protocols such as OPC UA. If the station level components, e.g. Programmable Logic Controller, PLC, virtual PLC, vPLC), or Operator Station, OS,/Human Machine Interface, HMI, system, support IEC 61850, it is normally possible to load the SCL-file on it, to get the entire IED information, a list with all logical-devices (LD), logical-nodes (LN), data-objects (DO) and data-attributes (DA). Although, to manage and to engineer the IED-data on the station level platform, there are no manufacturer independent standard methods, e.g. for the graphical representation on HMI and for data-archiving. Also, modern control system components, i.e. station level components, tend to support OPC UA and not IEC 61850. Therefore, herein techniques for mapping IEC 61850 Manufacturing Message Specification (MMS) and GOOSE in OPC UA CS and PubSub are presented. Furthermore, a model for representing classical electrical substation components, such as IEDs, in MTP is presented. To describe the module types, the Module Type Package, MTP, is used which defines and describes the interfaces and functions of the automation technology of modules, such as substations, and in particular IEDs, and thereby allows the integration of modules in a process orchestration layer, POL.

Modularizing the classical electrical substation components, such as feeder, transformer, line-synchronization and busbar systems, that represents the control scope of a vendor independent IED, enhance the integration of the substation bay level IEDs in all the units of a modern SCADA and Edge systems, i.e. the integration into a control application, and thus in the (overall) control system. This allows for the full optimization of the engineering process from electrical substations, whether it's an industrial plant substation or a classic energy sector substation, saving costs and resources. This also contributes to the evolution towards the future goal where modularized system components work based on "plug and produce" methods.

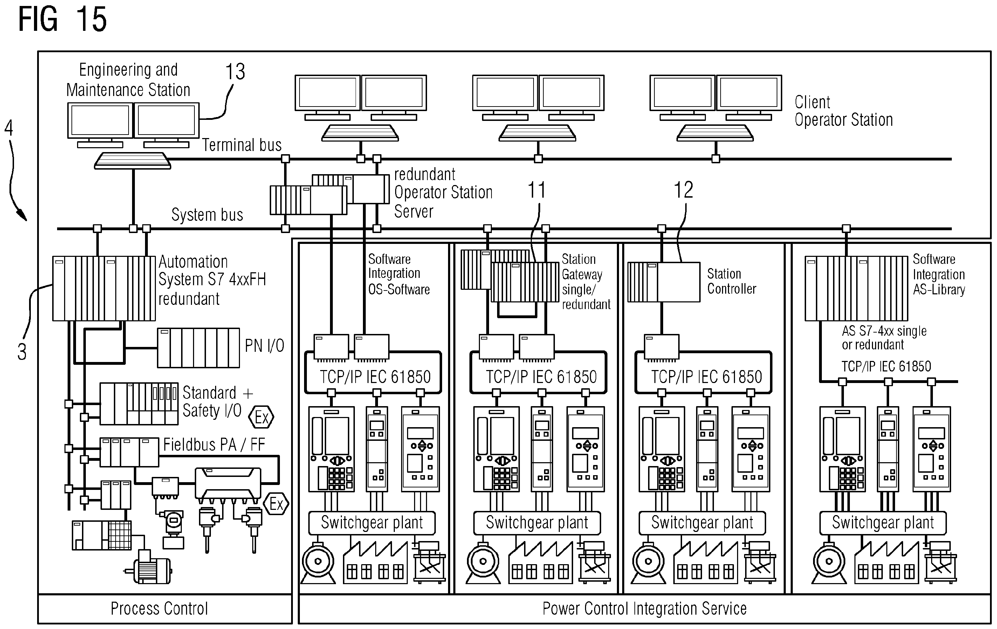

With the industry evolution, it was perceived that the integration of process and substation plants, cf. also Figure 15, would be a good strategy for the economy of resources in both areas, in a way that an integration process for these plants started to be discussed and called Electrical Integration. In this process, some obstacles were observed, like the high development, implementation and maintenance costs of a single plant with equipment from different vendors that communicate with different protocols, which involved large quantities of hard-wiring and little bandwidth. IEC 61850 standard emerged with solutions for these and other problems, but there is still skepticism about the real necessity of the application of its protocols in the single plant, instead of the protocols that are already established in the industry. The most widely recognized and utilized fieldbus-systems and protocols for IED integration at the station level, in addition to IEC 61850, include Modbus, Profibus, Profinet, Distributed Network Protocol 3 (DNP3) and IEC 60870. Modbus protocol is the oldest, with almost five decades of application. It is simple regarding hardware and software, being a mono master multi slave protocol that provides more economic solutions than other industrial protocols. It has some variations, like Modbus serial, Modbus Transmission Control Protocol (TCP) and Modbus Remote Terminal Unit (RTU). Although its simplicity, low cost and popularity, it is very susceptible to external attacks in form of message alterations, service denial and others. The Profibus protocol, like Modbus, is a fieldbus, i.e. protocols that "refer to the wired communication lines that connect the controllers to the actuators, sensors and other devices in industrial network". Developed in 1987, it is another single master multi slave protocol used in more complicated communications, involving sensible time requirements and connecting multiple devices from different vendors. It also has different variants, these being Profibus Decentralized Periphery (DP), Profibus Process Automation (PA) and Profibus Fieldbus Message Specification (FMS). The Profinet protocol, in turn, is an Industrial Ethernet protocol, being specifically the extension of the Profibus technology to Ethernet. Ultimately, it is very used due to its real-time data transmission, according to the increasing necessity for this type of communication in industry, that other fieldbuses don't support. Like the aforementioned protocols, Profinet also has three variants: Profinet Class A, Profinet Class B and Profinet Class C. For the integration into SCADA systems, protocols such as IEC 60870 (IEC, 2015) and DNP3 (IEEE, 2015), that use serial or Ethernet communication, are also used. These protocols are utilized for centralized control and monitoring, as they were specially developed for SCADA systems. Although, authors say that IEC 61850 still has more advantages when compared with these protocols, because it provides scalability, configuration flexibility, self-descriptive and hierarchically organized data and interoperability. For this reason, and for the fact that OPC UA strongly tends to be used in reference models, this work looks forward to the utilization of IEC 61850 and OPC UA. With the full-plant integration, there is one integrated system for both process and power automation and that this common system architecture allows the same hardware and software components to be used within the single system. In this way, it is perceived that the majority of the industrial protocols is unsuitable for the use in this integration, as the bandwidth of protocols like Modbus and Profibus might be enough for the process plants, but in substations the engineering requirements are different, and there is the necessity of a faster data transmission than the one provided by these Fieldbus protocols. In addition, ultimately, these protocols are being replaced with Ethernet-based protocols, which enables more data to be transmitted with increased efficiency. Even though being Ethernet-based and complying with IEC 61850 time requirements, Profinet is still unsuitable for this integration, since this protocol does not provide the necessary interoperability, as it needs an anticipated project of specific drivers in each equipment used in the plant so it operates correctly, which involves increased financial and time investments and can discourage the Electrical Integration. Thus, in the context of the process and substation plants integration, MMS, GOOSE and Sampled Values, SV, protocols perfectly comply with the single plant requirements, providing greater security and a faster data transmission in process plants as well as complying with the RT and interoperability requirements defined in IEC 61850. Therefore, IEC 61850 "is often referred to as future-proof, as the standard will be able to follow changes in communication technologies". In this way, as electrical substations are a crucial part of the industrial plants, in addition to the fact that industrial control systems are used for substation control in the energy market, this paper defends the use of IEC 61850 for control and communication of the substation bay and process levels to facilitate the integration, communication, monitoring, global control and engineering of the substation station level. Moreover, herein a mapping of IEC 61850 into OPC UA respectively into MTP is proposed, thus making possible the integration of the substation control and communication into, e.g., I4.0, reference models.

The IEC 61850 standard was created in 2003, with the aim to "define the communication between IEDs in the substation and the related system requirements. Emerging from the necessity of communication between IEDs from different vendors and higher substation operation control on the integration of Distributed Energy Resources (DERs) through Active Distribution System Management (ADSM), IEC 61850 revolutionized substation automation, proposing a data model, protocols and standardized services to guarantee the interoperability between devices from different vendors in the Substation Automation Systems (SAS). With this, the standard is known as the one which will dictate the future of substation automation, because in addition of fulfilling its objective, it defines unique requirements for integrated control, protection, data acquisition and automatic configuration with low cost and it is also the worldwide standard for Ethernet-based communication in substations. The standard defines the levels of a substation with its devices, networks and protocols, as presented in Fig. 2. The lowest level of the hierarchy is the process level, which contains the substation equipment like sensors, actuators and merging units, MUs. The next level is the bay level, with the IEDs, which are P&C devices that receive process information and can make control decisions locally. Finally, in the station level, the substation's control panel is present, with the supervisory systems and the process operators. To allow interoperability, IEC 61850 specifies a data model with standardized syntax and semantics to guarantee the correct transmission of information through the substation network by its protocols. In addition, a modelling language based on Extensible Markup Language, XML, for substation configuration and data exchange between different tools was defined, called SCL.

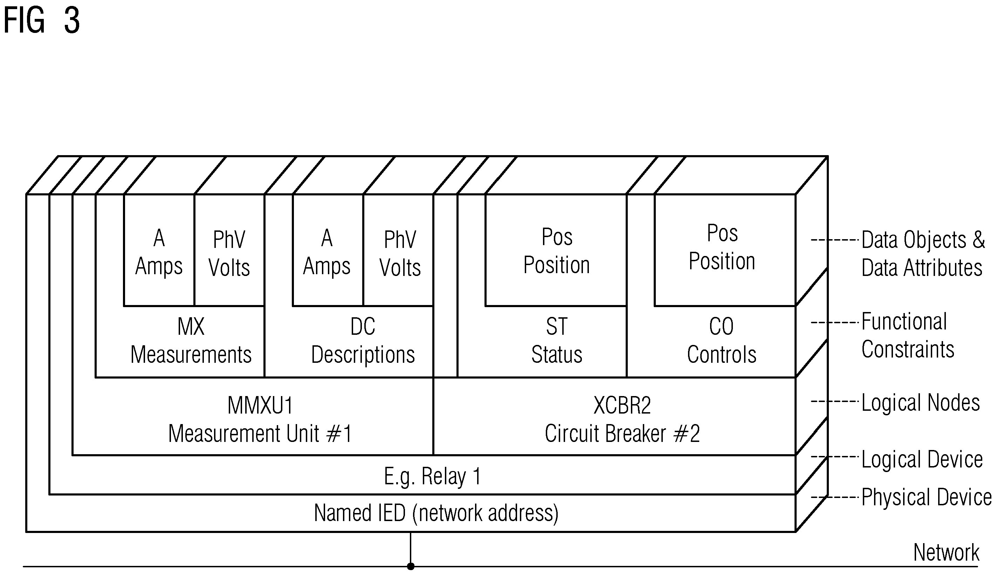

Fig. 3 illustrates the data model defined by IEC 61850. When an IED is connected to a substation network, its functions are virtualized in a logical device, LDs. Each LD can perform one or more operations in the substation, and these operations are represented by the LNs. Logical Nodes, i.e. abstract data objects, are the main elements of the IEC 61850 object-oriented virtual model, which consists of standardized data and data attributes. The LNs are responsible for the interoperability among devices, e.g., from different vendors, since they comprise or even consist of data objects, DO, that can be associated with other LNs. The DOs, in turn, are defined by Common Data Classes (CDC), which are certain data types, such as Bool, Float or Integer. DOs contain attributes that depend on the complexity of each component. These attributes are the data attributes, DAs. They are features of the DOs, like quality-code and timestamp, and can be categorized, based on its functionalities, in Functional Constraints (FC).

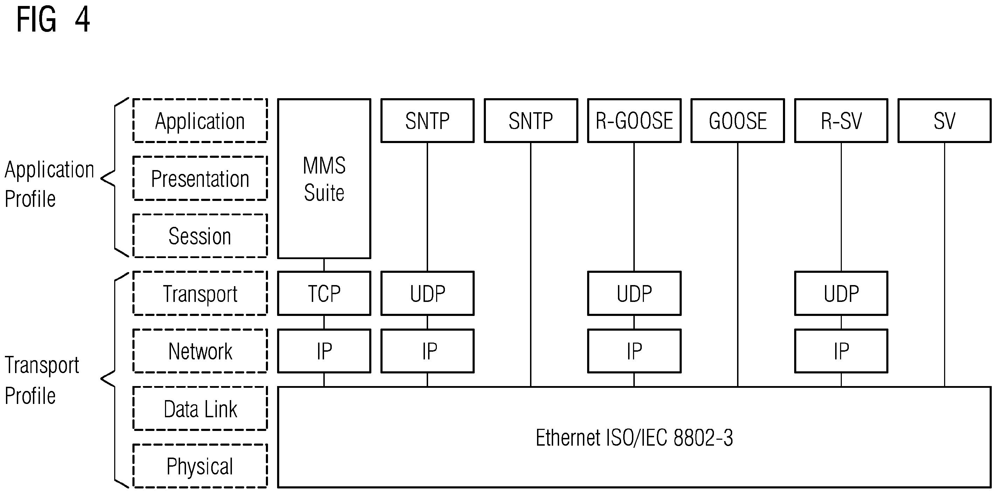

IEC 61850 defines four specific protocols for communication in substations, these being MMS, GOOSE, SV and Simple Network Time Protocol (SNTP) for time synchronization. These protocols were idealized according to the Open Systems Interconnection Reference Model (OSI/RM), showed in Fig. 4, and allow IEC 61850 to accomplish the aim to use a reduced number of protocols in substations using its data model. The MMS protocol is used between the bay and station level, being the only IEC 61850 protocol based on TCP/Internet Protocol (IP). This protocol uses client server, CS, communication for reporting, monitoring and control between IEDs. The CS communication acts in a way that the clients can access the server's available data or receive it from event-driven reports via TCP/IP. GOOSE and SV are divided into two categories. The first category includes GOOSE and SV messages that can be transmitted in a unicast or multicast way over the data link layer, that is used only within a Local Area Network (LAN). The second category R-GOOSE and R-SV defines the same application profile format as the first one but is transmitted over User Datagram Protocol (UDP)/IP allowing the messages to be routed to different LANs and Wide-Area Networks (WANs).

The GOOSE protocol, in turn, is used between the IEDs at the bay level to communicate emergency events in the substation. Furthermore, GOOSE is also used to send alerts to monitoring units on the station level and to send commands to different DERs for energy management purposes. The protocol assures a fast PubSub communication between the network agents, generally transmitting binary data, like status, controls and measurements in a time interval of 3 ms during equipment failure in the substation, being known for promoting RT communication. The SV protocol is used between the IEDs and the MUs at the process level. Like GOOSE, SV acts through PubSub communication, it is used to transmit analog values between IEDs and Stand-Alone Merging Units (SAMUs) via Ethernet, with a pre-defined frequency. Emphasizing the advantages of the IEC 61850 protocols, it is known that the GOOSE and SV RT feature is very appreciated, as normally the standard protocols have reduced transmission times and MMS is very reliable in situations that involve great distances, such as when the substation is kilometers away from the control station.

OPC UA was chosen by RAMI 4.0 as the framework for implementing the functionalities of its communication layer, instead of other industrial protocols currently available. Different authors recognize that the choice of OPC UA for smart manufacturing systems was a great win for the model and say that "there is no possibility of I4.0 without the OPC UA". These affirmations occurred because of OPC UA's great variety of functionalities that benefit a smart manufacturing system. Because of its data model, also referred to as information model herein, OPC UA enables that the different industrial protocols are integrated into it, assuring standardized communication between equipment and software from different vendors, concept known as semantic and structural interoperability, in addition to the integration between the RAMI 4.0 layers. This characteristic, in addition to its discovery mechanism, also provides a reliable, secure, fast, flexible, stable, consistent, dynamic and RT communication. Moreover, the OPC UA design, that provides high scalability, makes the standard capable of carrying data to IT applications in the cloud or at the edge. To cover the different requirements, OPC UA offers communication models such as CS or PubSub. When considering OPC UA over TSN, OPC UA PubSub is assumed as a more deterministic companion model to the OPC UA CS method.

OPC UA as platform-independent standard and at the same time promoting device-interoperability, in combination with the OSI/RM data link layer protocol TSN, which guarantees a deterministic behavior of Ethernet networks, solves different problematics such as transmission delays and unpredictability in the IT/OT communications. One of the most prominent suggestions to flatten the automation pyramid is the combination of TSN and OPC UA. TSN comprises of a set of standards for the data-link layer that provides time-synchronized communication over standard Ethernet, deterministic and low-latency. TSN contains two base pillars: priority-base frame scheduling and time synchronization. At the TSN level all the communication participants synchronize with a single time reference. With that, the common time reference can be divided into communication windows (time-aware traffic windows) that periodically repeat. A single window is split into different time slots. Institute of Electrical and Electronics Engineers (IEEE) 802.1Qbv standard defines the Time-Aware Shaper, the capability from each participant to configure a scheduler to associate time slots with different traffic classes. It allows frames that belong to the same class to be exchanged only during the respective time slot. In this manner, TSN minimizes the interference from best-effort traffic, ensuring bounded latency and jitter for time-critical traffic. Together, vPLCs, OPC UA, and TSN promise to transition industrial control infrastructure toward full OT/IT integration.

OPC UA compendium 10040 specifies how and which IEC 61850 data must be transmitted between the electrical and non-electrical processes in industrial plants, following the IEC 61850 specifications for OPC UA data model and/or services, so the joint use of these standards is possible (OPC Foundation, 2018). The compendium presents a set of use cases, to demonstrate how the specification is expected to be used and to illustrate the benefits of the use of a common data model between OPC UA and IEC 61850 (OPC Foundation, 2018).

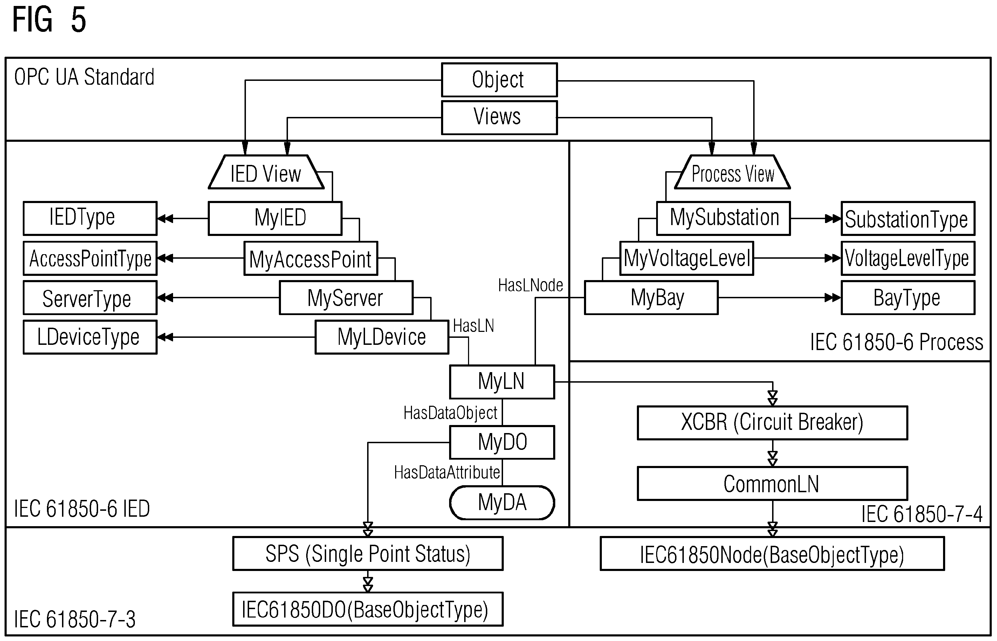

Fig. 5 presents how the compendium proposes the IEC 61850 data model representation using OPC UA. The model of a gateway that exchanges data with devices that control the Enterprise Network Management System (ENAMS) and the electric network is presented. The OPC UA data exchange configuration in the gateway is realized based on an IEC 61850 SCL file. The gateway is defined as an IED which contains an OPC UA server, providing services to the clients by forwarding requests to other servers through its IEC 61850 client (OPC Foundation, 2018).

Now, one of the discussed topics on I4.0 development is the possibility to produce individualized goods, following customer subjectivity. In the modern world, besides consumption individualization, its tendencies are ephemeral, causing the production of products with shorter life cycles in lower volumes and higher variety, encouraging enterprises to reinvent its production ways as fast as ever. However, using the automation systems called "monolithic" or traditional, that is very defying, because of its fixed infrastructure without much space for alterations, needing high financial and time investments for readjustments. One alternative to this problem is the modular automation systems, known as MTP. MTP is a technology described by the norm Association of German Engineers (VDI)/Association for Electrical Electronic & Information Technologies (VDE)/Standardization Association for Measurement and Control in Chemical Industries (NAMUR) 2658, with the aim to "considerably reduce planning times for new plants and refurbishment of existing plants" (VDI/VDE/NAMUR 2020) and it's considered the solution for individualization and production flexibility problems.

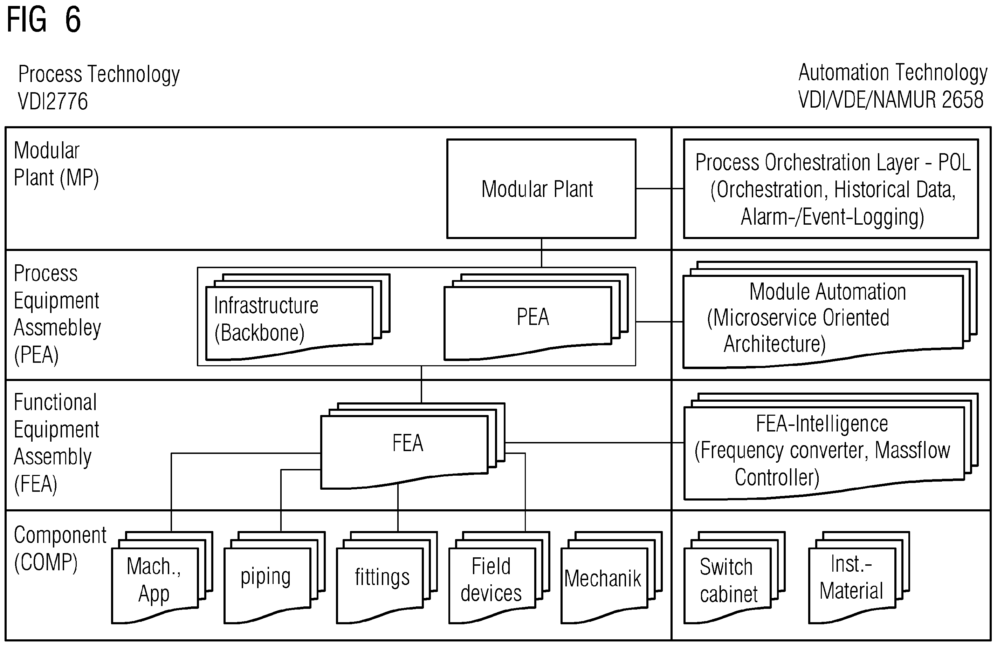

Fig. 6 shows the hierarchical structure of modular plants. This system consists of four parts: The Process Equipment Assemblies (PEA), physical autonomous modules with specific purposes for different applications, which consists of at least one Functional Equipment Assembly (FEA), which refers to the equipment and machines, Components (COMP), used in the process; the MTP interface which contains the information about how the modular plant should be disposed and about how the modular system, with its components, should work, as well as sending and receiving information about the process, through the control system, e.g., comprising a control application. This control system, implementing a control application called POL, reads the MTP object or file and processes it, recognizing the function of each module and how it should be controlled. The MTP object is as well referred to as function unit herein. Among MTP's advantages, there is its quick idealization and project, fast building in the plant, for being a technology that follows the principle "plug and produce". The modules can also be reused in other projects, making it economic and guaranteeing flexibility for the enterprises, in terms of capacity, variety of manufactured products and increased efficiency.

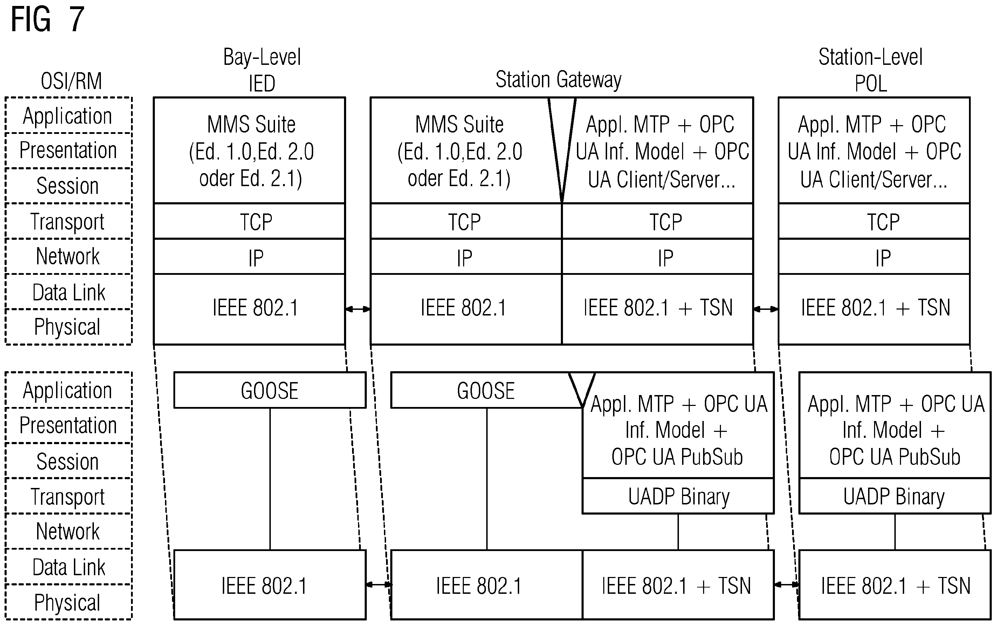

A method and other techniques are proposed that aim to provide a vendor-independent integration of substations, bay level devices such IEDs. Furthermore it proposed to perform the integration of OPC UA PubSub TSN-GOOSE and OPC UA CS-MMS (part based on OPC UA Compendium 10040 (OPC Foundation,2018) by way of an OSI/RM application-layer gateway, also referred to as gateway or station gateway (i.e. an "integration" IED). To that end, the IEDs are mapped inside modularized MTP objects or files for the easy integration into the POL. Fig. 7 provides a depiction of the gateway's layered architecture. These modularized MTP objects may be predetermined and provided in the form one or more templates, e.g. as one or more files. Each template of a plurality of templates may thus represent a different type of IED.

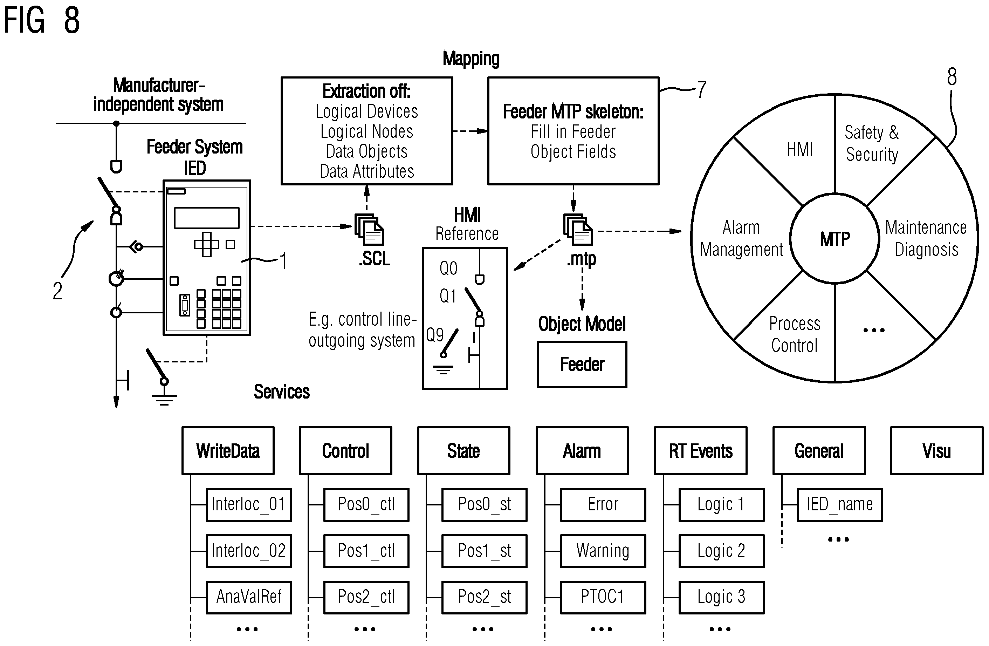

An IED typically controls and monitors a specific part or component of an electrical substation process level, such as: feeders, motors, transformers and busbar systems. IEDs from different manufacturers can be used to manage different systems at the process layer. The method proposes representing parts of the electrical substation as Process Equipment Assemblies (PEAs), which are orchestrated within a POL or controlled via a PLC or vPLC. The techniques disclosed herein include predefined MTP skeletons, also referred to as templates, containing all necessary services for the specific IED type. Each IED type is associated with a skeleton. For example, a feeder system has a predefined skeleton. Fig. 8 illustrates the process of filling in a (feeder) template, and generation of a function unit, such as (feeder) object, or more generally an MTP object. Based on the IED's capability to execute certain procedures, a service from the MTP skeleton may be determined, which can either be used or not. From the respective IED-SCL file, data objects and data attributes (services and data) are mapped into the (feeder) template, or object. The mapping process may be implemented in such a way that a software package based on artificial intelligence will be trained to analyze the SCL files (from manufacturer-independent IEDs) and automatically select and/or fill in the template, e.g. said feeder skeleton. After this mapping, the MTP object or function unit in general is generated. It should be understood that as already mentioned the terms skeleton and template are used interchangeably herein.

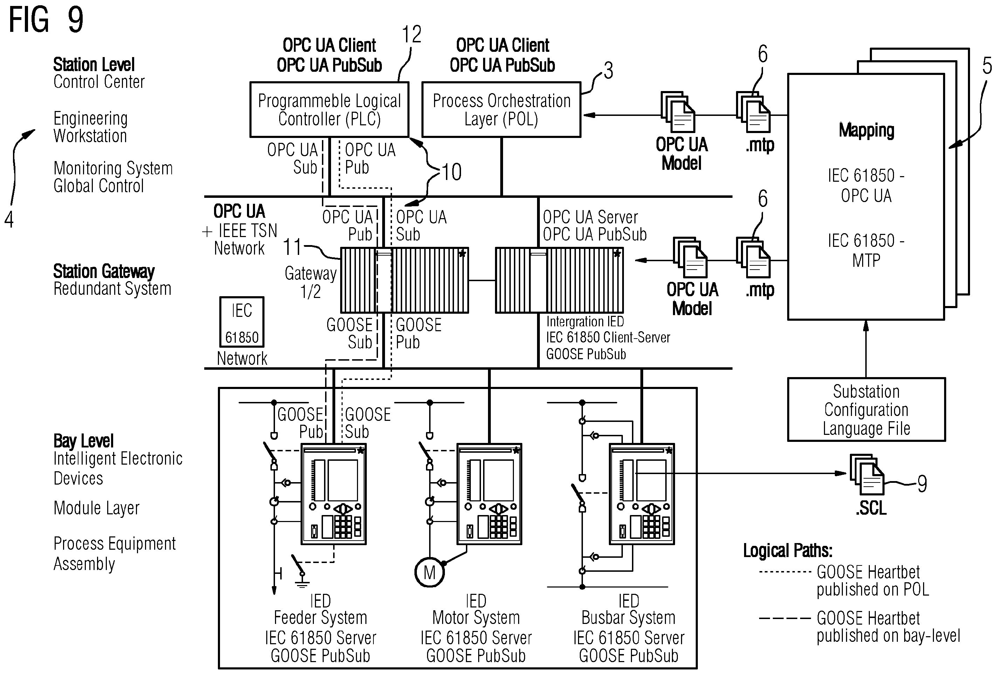

The mapping process of substation components, e.g. said IEDs, into a template, e.g. an MTP file, or into a function unit, such as an MTP object, may be carried out, e.g., comprising knowledge about and relating to process automation and/or control, as well as substation automation and/or control. From the station level perspective, an IED works normally as an IEC 61850 server and GOOSE PubSub on the network. When the function unit file, in particular an MTP file, is generated for an IED, the required IEC 61850 objects are mapped into a generated OPC UA information model structure, and an IEC 61850 client instance or a GOOSE PubSub agent is created for the corresponding IED. For the MMS communication (IEC 61850 client) an OPC UA server is created. This server can contain more than one mapped IEC 61850 client. Mapping GOOSE PubSub in OPC UA PubSub TSN is discussed in the next section. After generating the mapping, the MTP file and thus OPC UA model become available for the control application, e.g. said POL, and peripheral devices, such as the gateway and/or an industrial controller, e.g. a PLC. The gateway may be configured using the generated files on the mapping process. Fig. 9 illustrates the architecture. To enhance robustness and availability, the gateway will be capable of operating in redundancy. Thus, the one or more IED devices can now be controlled and/or monitored from the process control application.

Now a function unit (file), such as a (feeder) MTP skeleton, that can be used with an IED communicating over all versions of a standard, and/or from any vendor is described in more detail. Concerning the different services, a feeder MTP skeleton will be able to provide, among others, process values, alarms, control commands and/or logic for RT events. Fig. 8 illustrates a plurality of possible and/or different services. The IED monitors relevant measured values and controls the switches, e.g. of a feeder. The "control" services can send commands to the IED, such as switch positions. "WriteData" is used to set values on the IED. The "state" services provide all monitored status values of the IED, including current switch positions, analog measured values and the connection status of the IED. All alarms of the protection device are collected as "alarm" services. "General" services provide general device information, such as the IED name and services that span multiple domains, enabling layers to exchange information and providing feedback. These services create an integrated approach that ensures all levels work together, providing process effectiveness. "Visu" contains the configuration for the visualization. The transmission of these services occurs over the IEC 61850 network using MMS protocol, while within the OPC UA network, the services are facilitated by the OPC UA CS communication model. "RT Events" (Real Time Events) services are intended to transmit GOOSE heartbeat signals. The visualization of an IED consists of a symbol and a detailed view (faceplate), which can be opened via the symbol to display detail information, e.g. measurement values, alarms, and to send commands. A feeder symbol displays up to eight switches. The designation "Q" for electrical switchgear follows the IEC 81346-2 standard. The number following it is not standardized but corresponds to a typical project configuration.

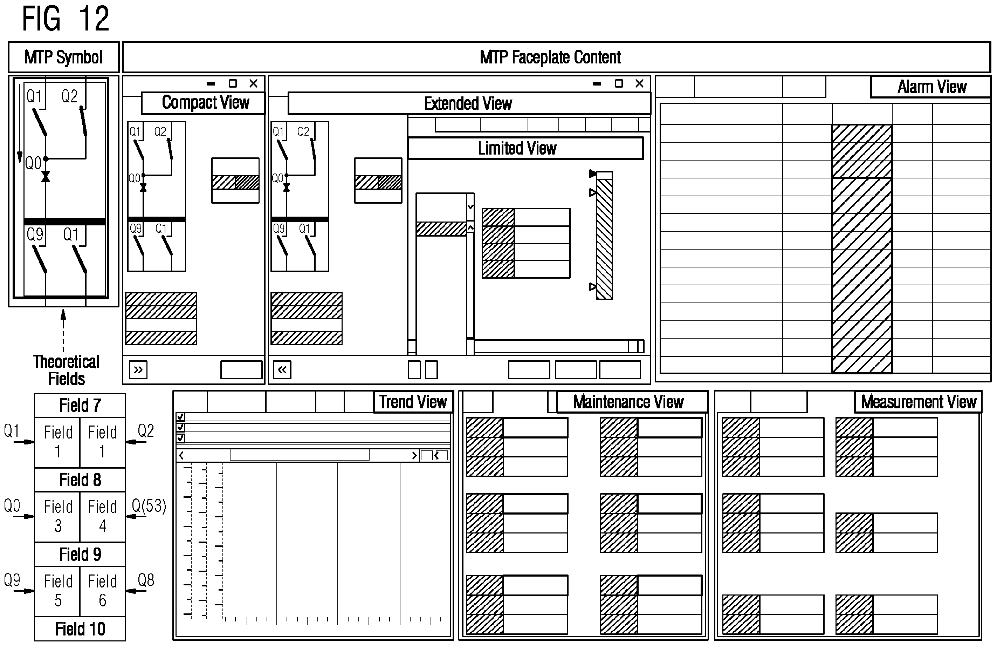

Fig. 12 shows the theoretical field-structure and the different views of the object. The switches are displayed in fields 1-6. Q1, Q2, Q0, Q9, and Q8 are assigned to fixed fields, while Q51, Q52, and Q53 can be configured as additional switches, allowing two switches to be displayed in a single field. Q53 is an exception, as it can also be individually configured as a ground switch in field 4 for Q0. Otherwise, field 4 is not used. The representation of the switch per field is defined via a symbol code. Table 3 shows examples of possible symbol codes. In the future, symbols from standards such as IEC 60617 (IEC, 2024) will be considered.

In IEC 61850, switch positions are represented with two bits, allowing each switch to have four states. For two switches, there are 16 possible combinations, which results in 16 different states. Connections are generated automatically based on the switch configuration but can be customized using specific symbol codes for each project. The faceplate includes both a compact and an extended display format, as shown in Fig. 12. In the compact format, the most important functions are displayed in the main window, such as key measured values, operational functions, device status information or an indication of the operating mode. The entire services on the background of the object are implemented using finite state machines, e.g., for controlling the different windows. Services to send IEC 61850 commands that operate as interface to the control models of IEC 61850 are implemented. The position of each configured switch can be monitored and controlled via faceplate. The interlock conditions of the switches are also displayed. The switches are presented with their designations, e.g., Q0 for Circuit Breaker (CB). The measurement view, Fig. 12, of the faceplate model displays the most important measured values, which are made available by the respective service, in the associated faceplate view. The most important measured values are phase currents, voltages between phases, total power, frequency, power factor, energy supply and energy demand.

Besides the display of alarms regarding to the trip of protection functions of the IED, there will be also adjustable alarm limits for measurement values and for monitoring the wear of the switch gear. Predefined alarm texts are available for frequently used protective functions, The number in the alarm text corresponds to the American National Standards Institute (ANSI) code of the function (e.g., "51-1" indicates overcurrent level 1 of the independent overcurrent protection). All alarm texts, alarm classes, and priorities of the predefined alarms can be freely modified. In addition to the predefined alarms, it is possible to add multiple instances of the customizable alarm service function. To allow the flexible display of the feeder, units, texts for the switch positions, labels for measured values, etc., a service is defined for each text. This enables adaptation of the visualization to the specific project requirements.

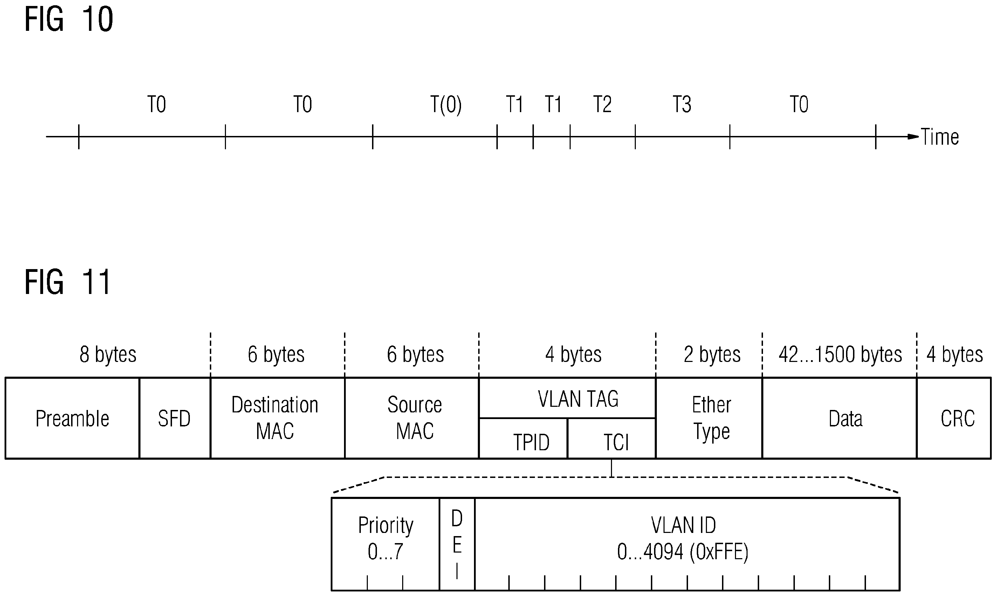

The GOOSE protocol may be mapped in OPC UA, e.g. in OPC UA over TSN. In a first step non-routable GOOSE will be applied. The IEC 61850 server on the gateway will be able to publish GOOSE events to the IEDs, coming from orchestration OPC UA Pub-agents and received over a OPC UA Sub-agent on the gateway, over the TSN network, shown in Fig. 9 as the green logical path, i.e. dotted line. On the gateway, an IEC 61850 Sub-agent will be able to "enjoy" the different GOOSE heartbeat streams published by IEDs. These streams are forwarded over OPC UA-Pub agents and received on the orchestration end-stations by OPC UA-Sub agents, in Fig. 9 shown as the pink logical path, also as a dotted line. At the "gateway's OPC UA network side" the services created to transmit the GOOSE signals are allocated as "RT Events" on the MTP-object, as shown in Figure 8. This service is intended in most of the cases for the integration in PLCs, where fast reaction logic is implemented. GOOSE data is provided over a dataset on the server, which can contain one or more assigned DAs. Non-routable GOOSE data is multicast published. A mix of a heartbeat transmission and bit-change-retransmission is used to send the data. The characteristics of a GOOSE heartbeat stream are individually done using the Generic Substation Event (GSE) class. Fig. 10 presents the GOOSE transmission intervals. To ensure the reliability of the transmission, in case of event, that means, value change inside the GOOSE dataset, the heartbeat frames are retransmitted in shorter intervals. The time intervals in Fig. 10 represent: T0 stable interval of heartbeat transmission; T(0) stable heartbeat may have been interrupted by an event; T1 shortest resent interval after the event; T2 and T3 resent intervals until the heartbeat stabilizes (DIN EN, 2022).

TSN enables unidirectional data streams, originating from a single source and sent to one or more destinations, with each stream identified by a unique TSN Stream ID. A popular method for TSN Stream ID uses the Destination Medium Access Control (DMAC) address and Virtual Local Area Network (VLAN) tag, allowing a precise frame forwarding by bridges in OSI/RM layer two. Fig. 11 presents the structure of the VLAN-tagged Ethernet frame. VLAN tags also facilitate Quality of Service (QoS) prioritization, enabling frames to be directed to specific queues and scheduled for timed delivery. For OPC UA PubSub over TSN, data is transmitted on a synchronized schedule, requiring a network-synchronized "send schedule" for precise timing behavior. End systems supporting TSN need Precision Time Protocol (PTP)-based clock synchronization and Network Interface Cards (NICs) with QoS features, which coordinate with bridges, schedules to ensure timely message forwarding.

TSN enables unidirectional data streams, originating from a single source and sent to one or more destinations, with each stream identified by a unique TSN Stream ID. A popular method for TSN Stream ID uses the Destination Medium Access Control (DMAC) address and Virtual Local Area Network (VLAN) tag, allowing a precise frame forwarding by bridges in OSI/RM layer two. Fig. 11 presents the structure of the VLAN-tagged Ethernet frame. VLAN tags also facilitate Quality of Service (QoS) prioritization, enabling frames to be directed to specific queues and scheduled for timed delivery. For OPC UA PubSub over TSN, data is transmitted on a synchronized schedule, requiring a network-synchronized "send schedule" for precise timing behavior. End systems supporting TSN need Precision Time Protocol (PTP)-based clock synchronization and Network Interface Cards (NICs) with QoS features, which coordinate with bridges, schedules to ensure timely message forwarding (GOGOLEV; BRAUN, 2021).

A frame over OPC UA PubSub TSN can be safely transmitted in short time intervals. The time requirement for the transmission of a GOOSE frame corresponds to ≤ 3ms (Table 1). Based on the content of Table 6 is possible to confirm that OPC UA PubSub TSN can fulfil the transmission-time requirements from GOOSE.

Thus, a non-standardized approach to integrating IEDs at the station level results in high costs for development, implementation, and maintenance due to varied protocols and the need for physical or software-based hard-wiring. Traditional protocols like Modbus, Profibus, and Profinet are still widely used but often lack interoperability and can create compatibility or low bandwidth issues, and protocols such as DNP3 and IEC 60870 do not tend to be used in reference models. IEC 61850, however, uses Ethernet real-time and non-real-time communication and provides a standardized, object-oriented model, enabling interoperable communication between substation components. For these reasons IEC 61850 is the standard adopted worldwide and tends to remain the standard for process and bay level substation communication. Reference models, e.g., RAMI 4.0 and IIRA are inclined to adopt OPC UA, as it offers a unified information model that provides interoperability and a scalability, closing the IT/OT gap. That means, the systems used on the station level of an electrical substation, such as SCADA, Edge-platforms and PLCs, tend to support OPC UA and not IEC 61850. Furthermore, the plants tend to be projected in a modular way, using technologies like MTP, accelerating and facilitating the engineering process, as it allows full reusability and tend to support "plug and procedure" services. Using the introduced integration solution, legacy IEDs from existent plants and modern IEDs from new plants can be easily integrated in modern I4.0 control systems. Using the feeder MTP skeleton, mapped and integrated over the presented gateway method (Fig. 8; Fig. 9), it is possible to quickly integrate the P&C IED inside the SCADA system (POL) and inside a PLC using the same MTP basis. Mapping the IED in an MTP object, allow filtering the necessary data and services required from the IED avoiding unnecessary data on the OPC UA interface. The proposed "RT Event"-services can be used for example, for the easy implementation of a load-shedding system of an industrial plant, with implemented logic-control for it, on the PLC and POL. For the concept validation of the necessary functionalities of a feeder system, a faceplate prototype was developed using the Siemens SCADA system SIMATIC WinCC Open Architecture and its native IEC 61850 MMS channel. Fig. 12 presents the prototype. Primarily, the following services, transmitted over MMS, needs to be integrated and mirrored on the MTP feeder skeleton:
a) Commands, controllable common data classes Double Point Control (DPC) and Single Point Status (SPS);
b) Reporting services using buffered and unbuffered report control blocks (BRCB and URCB) associated to an dynamic or static dataset, for the alarm-data transmission;
c) Periodically read request (polling communication) for the transmission of measurements;
d) Acyclic write request ("write-data") for the general configurations on the IED, such as interlocks and nominal values. Multiple reporting datasets can be coupled with an MTP object.

The period of the read-requests and the number of data-attributes requested in a single MMS-telegram can be configured. Measurement values should be transmitted over periodical requests and not over reporting, to avoid unnecessary data rate lost with telegram headers. Different P&C feeder IEDs structures, from different vendors were simulated using the software Triangle MicroWorks 61850 Test Suite Pro. All the IEDs were able to be integrated and represented using the developed faceplate. Security concepts for the entire solution, e.g. defined in IEC/Technical Specification (TS) 62443 (IEC, 2016), will be considered on the next steps of this research. The gateway and the MTP skeleton are currently in a development stage, the entire validation results are going to be published in a subsequent paper.

IEC 61850 is the global standard for substation communication and OPC UA is the standard for closing the IT/OT gap in I4.0. Given the critical role of OPC UA in the development of reference models, this research contributes to advance the mapping, integration, and modularization of IEDs communicating via IEC 61850 within the OPC UA framework. The content presented in this paper proposes a vendor-independent method for the integration of the electrical substation bay level IEDs in the station level (POL and PLC) using MTP technology. The requirements for representing a feeder system in MTP were presented. The presented method will allow the modularization of the bay level, optimizing the engineering process through reusability and standardization, therefore reducing drastically costs in the projection of an electrical substation in classic industrial plants or in the traditional energy sector.

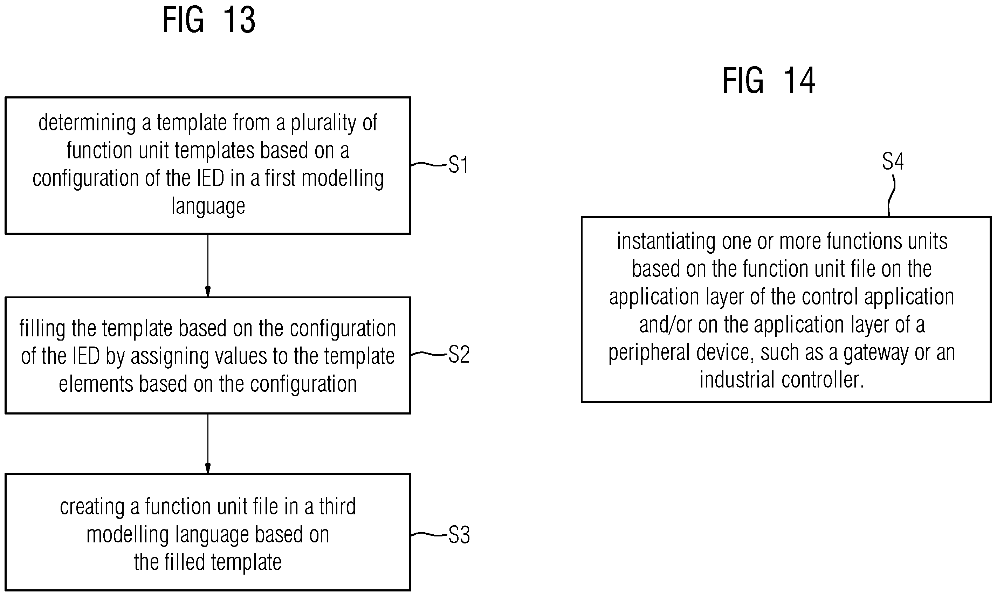

Further exemplary embodiments are shown in Figure 13 to 14 and are described in the following. A function unit may be implemented as a Module Type Package, MTP, e.g., according to standard series VDI/VDE/NAMUR 2658. An MTP may thus provide a common "language" for describing the properties of IEDs independent of manufacturer and technology. This functional description may be based on automation markup language, AML. This makes it possible for any higher-level automation system that "speaks" MTP to accurately control a specific module, whether it's a tank or mixer. An MTP may thus provide for a modular production and effortless commissioning of new modules into process lines. Herein it is proposed to include an IED as such a new module into the automation system. An IED may be controlled by an industrial controller, such as a SIMATIC S7-1500 PLC. The industrial controller, e.g. in the form of said PLC, and or the IED can be connected to a gateway, such an Industrial Edge Device, where the mapping is done and an MTP interface is provided to elevate the IED to be MTP compliant. Hence, a real or virtual industrial controller, a gateway and/or the IED are on the same network. The devices and applications may communicate using a communication protocol as described herein. The gateway may then provide MTP compliant OPC UA server to communicate with POL. The function unit file such as an MTP file ".mtp" can be then used to integrate the IED (and more precisely the corresponding function unit) into Process Orchestration Layer (POL), such as SIMATIC PCS neo. The IED may be (part of an) Process equipment assembly, PEA, to be elevated into MTP compliancy. The IED may offer automated programs for protective and/or, control functions, e.g., controlling separate devices, an autoreclose function, self monitoring function, communication functions.

IEDs are installed in strategic locations to collect data and automatic protection of substation equipment. An IED includes microprocessor-based controllers of power system equipment, such as circuit breakers, transformers and capacitor banks. IEDs receive data from sensors and power equipment, and can issue control commands, such as tripping circuit breakers if they sense voltage, current, or frequency anomalies, or raise or lower voltage levels in order to maintain the desired level. Common types of IEDs include protective relaying devices, On Load Tap Changer controllers, circuit breaker controllers, capacitor bank switches, recloser controllers, voltage regulators etc. SA has to perform many functions and in IEC 61850, the functions are divided into sub functions. Each sub function is performed by the IED installed in the substation and it can perform one or more functions. A set of sub functions is integrated together to perform a substation automation function. Thus, data communication between the control center and IED remote points and among the IEDs is very important for real time operation.

SCADA is a computer system for gathering and analysing real time data. These systems are used to monitor and control a plant or equipment in industries such as telecommunications, water and waste control, energy, oil and gas refining and transportation. In addition, SCADA systems are needed to monitor and control a large geographical displacement where an organisation may not have enough manpower to cover. Thus, reliable communication and operability of these areas or sites is critical to profitability. The system is a common industrial process automation system which is used to collect data from instruments and sensors located at remote sites and to transmit data at a central site for either monitoring or controlling purpose.

A substation or substation automation system, SAS, uses a number of devices integrated into a functional array for the purpose of monitoring, controlling, and configuring the substation. According to IEC 61850, the SAS layout is structured in three levels:
Station level: A redundant PC based Human machine Interface (HMI) enables local station control through the software package that contains an extensive range of SCADA functions. The station level contains the station-oriented functions, which cannot be realised at bay level, e.g. alarm list or event list related to the entire substation, gateway for the communication with remote control centers. A dedicated master clock for the synchronisation of the entire system shall be provided.

Bay level: A bay comprises of circuit breaker and associated isolators, earth switches and instrument transformers. At bay level, the IEDs provide all bay level functions such as control (are directly connected to the switchgear without any need for additional interposing or transducers. Each bay control IED is independent of the others and its functioning is not affected by any fault occurring in any of the other bay control units of the station. command outputs), monitoring (status indications, measured values) and protection.

Process level: It consists of all the switchyard devices which are hardwired using copper cables and use fibre optic cables to connect the bay level IED's used for control and protection.

The SAS may contain the following main functional parts: Human Machine Interface (HMI) with process database includes Operation and supervision of equipment, Data presentation, Separate gateway for remote supervisory control via SCADA. Master clock (e.g. GPS receiver). A collection of the relevant data concerning the substation and distribution of the data where needed and monitoring of Gas density, Switchgear and Transformer. Data exchange between the different systems components via serial bus. Bay and station level devices for control, monitoring and protection. Bay-oriented local control panels with mimic diagram.

As described herein, an engineering tool, e.g., an MTP Creator, may be used to create MTP files from an IED, e.g. based on the configuration of the IED. Such configuration may be provided in the form of a configuration file and/or may be extracted from the IED device or may be obtained from another engineering tool, e.g. used for configuring the IED. In the case of an IED a modelling language such as SCL may be used.

An MTP file may contains MTP relevant OPC UA tags derived from the IED's configuration as well as HMI screen objects that are generated by control application. The generated MTP files can later be imported into a control application such as said POL, e.g., from Siemens or other vendors.

As the case may be, the one or more templates may be stored in a library, e.g., on a non-transitory and/or non-volatile memory. The library may contain interfaces that are in compliance with VDI/VDE/NAMUR 2658 Part 3 standard which allows to map the IDE's configuration of the one or more IEDs in MTP form.

Hence a method of integrating an intelligent electronic device, IED, controlling a power system equipment, such as a circuit breaker, a transformer, and/or a capacitor bank, into a control application on an application layer of a control system is proposed. As mentioned, the one or more IEDs may be controlled and/or monitored by said control application. A function unit, e.g., in the form of an Modular Type Package, MTP, can be integrated in the control application, e.g., SIMATIC PCS 7. The control application is implemented in software, e.g., comprising program code. The control application may serve as Process Orchestration Layer, POL. The function units, e.g. in the form of said MTPs, may be modelled according to modelling rules that allow for an integration of the function units into the control application.

Thus, in a step S1 a template from a plurality of function unit templates may be determined based on a configuration of the IED in a first modelling language. The first modelling language may for example be a system configuration description language also known as Substation Configuration description Language, SCL, which for example is the language and representation format specified by IEC 61850 for the configuration of electrical substation devices, e.g. said IEDs. This includes representation of modeled data and communication services specified by IEC 61850-7-X standard documents. The complete SCL representation and its details are specified in IEC 61850-6 standard document. It includes data representation for substation device entities; its associated functions represented as logical nodes, communication systems and capabilities. The complete representation of data as SCL enhances the different devices of a substation to exchange the SCL files and to have a complete interoperability.

Depending on the purpose of SCL file, it is classified into the following types:
IED Capability Description, ICD, file: It defines complete capability of an IED. This file needs to be supplied by each manufacturer to make the complete system configuration. The file contains a single IED section, an optional communication section and an optional substation part which denotes the physical entities corresponding to the IED.

System Specification Description, SSD, file: This file contains complete specification of a substation automation system including single line diagram for the substation and its functionalities, i.e. logical nodes. This will have Substation part, Data type templates and logical node type definitions but need not have IED section.

Substation Configuration Description, SCD, file: This is the file describing complete substation detail. It contains substation, communication, IED and Data type template sections. An .SSD file and different .ICD files contribute in making an SCD file.

Configured IED Description, CID, file: It is a file used to have communication between an IED configuration tool to an IED. It can be considered as an SCD file stripped down to what the concerned IED need to know and contains a mandatory communication section of the addressed IED.

Instantiated IED Description, IID, file: It defines the configuration of one IED for a project and is used as data exchange format from the IED configurator to the system configurator. This file contains only the data for the IED being configured: one IED section, the communication section with the IED's communication parameters, the IED's data type templates, and, optionally, a substation section with the binding of functions, i.e. said LNodes, to the single line diagram. System Exchange Description, SED, file: This file is to be exchanged between system configurators of different projects. It describes the interfaces of one project to be used by another project, and at re-import the additionally engineered interface connections between the projects. It is a subset of an SCD file with additional engineering rights for each IED as well as the ownership (project) of SCL data.

SCL is an XML language used for system specification and IED/system configuration of IEC 61850 systems. Hence the first modelling language may be based on XML, having a fist syntax. The configuration of the IED may thus be obtained and/or created in the form of an XML file. For example, it is possible to export the configuration of an IED as an SCL file.

The function unit templates may represent different types of IEDs and comprise variables for controlling and/or monitoring of a respective IED type in the form of one or more services. As mentioned, the function unit templates may correspond MTP (files). The variables of the function unit may correspond to the variables of the IED, i.e. the variables that can be set in the IED to control and/or monitor the power system equipment. For example, there may be provided a different template for a different type of IED. A type may relate to the purpose, function and/usage of an IED such as a Digital Relay, a Voltage Regulator, a Protection Relay, a Circuit Breaker, a Load Tap Changer, a Recloser Controller, a Capacitor Bank Switch, or generic template for one or more other types. Thus, for any such type a template may be provided.

The function unit template may thus comprise one or more services that comprise (a description of) the functionality of the respective type of IED. Such services may thus comprise the one or more variables of the IED. That is, a first service may thus comprise a first set or group of said variables, whereas a second service may comprise a second set or group of variables of the IED.

Hence a template may be determined or selected or even generated, e.g., by an engineering tool, based on the configuration of the IED. The template may thus encapsulate template elements representing an application layer information model of the respective IED type in a second modelling language. The application layer is the top layer of the Open Systems Interconnection (OSI) model. The application layer may provide an interface between the control application and other software applications, and/or allows accessing network services and data. Thus, based on the determined template, i.e. based on the type of IED, a different information model may be encapsulated in the template. The template may thus comprise an information model dependent on a respective IED type and/or for a respective IED type. The information model is a representation of concepts and the relationships, constraints, rules, and operations to specify data semantics for a chosen domain of discourse, such as in this an IED type. The information model may for example be an OPC/UA information model. The information model may furthermore be provided in a second modelling language. As before the second modelling language may also be base don XML but may comprise a different syntax than the fist modelling language. For example, the OPC UA information model or meta Model (the OPC UA Address Space Model) is represented by UML classes and UML objects, which e.g. are marked with the stereotype <<TypeExtension>>. Thus, the information model, e.g., the OPC UA Information Model, may stored as XML file. Hence, the information model may be defined in an file, such as a file comprising a definition in the second modelling language, e.g. said XML code according to a syntax and/or structure different to the one of the first modelling language. For example, a Unified Modelling Language, UML, based on XML can be used as a second modelling language. XML stands for extensible markup language. Hence, XML can be used to describe, define and/or store information model, e.g., provided in UML. That is, UML diagrams may be provide in XML-based file formats. Hence, the OPC/UA information model may be described in UML, wherein to that end the second modelling language, e.g., XML, is used.

In a second Step S2, the template may be filled based on the configuration of the IED by assigning values to the template elements based on the configuration. That is the template is populated based on the configuration and the values of the variables in the configuration (file). To that end the configuration is mapped onto the template. For example, the elements of the SCL (file) representing the configuration of the IED may be mapped on the information model of OPC/UA. As explained above, SCL is the grammar used to exchange configuration of the whole or parts of an IEC 61850 system between tools. For this purpose, SCL has to describe all parts of the system: functional requirements, electrical topology, device description, communication and data flow. For example, the information mode may be populated by using the IEC 61850 SCL file structure to create the object instances of the address space. Such filling or mapping may for example be based on and/in accordance with "5.1.2 Object Instances" of OPC 10040 - OPC Unified Architecture for IEC 61850, Release Candidate 1.0, 2018-02-05.

In a step S3, a function unit file in a third modelling language may be created based on the filled template. Thus, as a result of the mapping a filled information model is obtained and provided in a file format. This function unit file may then be imported, e.g., from the engineering tool, into the control application, e.g., said POL. As the third modelling language AutomationML may be used. Hence, the third modelling language is different from the first and/or second modelling language. In particular, the syntax and structure may be different between the first, second and/or third modelling language - even though they may be based on XML. Hence, the information model in the second modelling language is encapsulated in, i.e. within, the third modelling language. The third modelling language comprising the description of the services the IED is capable of and the information model comprising the variable and in the filled state also the values of the variables of the IED. The IED configuration may be mapped from the first modelling language (of the IED configuration) into the second modelling language (of the information model) as described herein. Thus, the function unit file becomes interpretable by the control application.

The function unit file thus may use an internationally standardized (IEC 62714) automation-specific XML data format called Automation Markup Language, AML, to define the IED. A function unit compliant controller, e.g., an MTP-compliant POL, may thus import the one or more function unit files and uses the information model for monitoring, controlling, and/or visualization of the IED, and/or the overall automation process.

The function unit file thus may comprises the services encapsulated in said third modelling language. These one or more services describe the automation functions of the IED to the control application, e.g. said POL. The function unit thus assumes the role of a service provider. The service offered by the IED (via the function unit) can be accessed by the control application, e.g. said POL, which thus becomes a service user. A service may be represented by a state model, e.g. in accordance with VDI/VDE 2658 Part 4. The control application can arrange the services of the different IED (via the function units) in a sequence required for performing an automation process, such as the production of a desired product. A function unit for controlling and/or monitoring of the IED may be thus integrated into the control application, preferably based on the function unit file.

The function unit file may thus describe access to the IED, e.g., one or more communication protocols and/or interface methods to be used by the control application. When a function unit file, such as MTP file, is generated for an IED, the required IEC 61850 objects are mapped into a generated OPC UA information model structure, and an IEC 61850 client instance or a GOOSE PubSub agent is created for the corresponding IED. For the MMS communication (IEC 61850 client) an OPC UA server is created. The function unit file, such as said MTP file, and thus the OPC UA model become available for the control application, e.g., said POL, and one or more peripheral devices, such as said gateway and/or PLC.

The function unit file describes one or more services the IED is capable of, and the one or more services comprise the variables for controlling and/or monitoring of the IED. That is, based on the IED's capability to execute certain procedures, a service from the function unit (file) or said templates can be used.

As described herein a configuration file, e.g., an SCL file, of said IED may be obtained in the first modelling language. The control application may host, e.g., execute, one or more other functions units and, e.g., operating an automation system by, interconnecting the function unit to the other function units. To that end, the function unit may be integrated in the control application by generating one or more interfaces for accessing the data model in the function unit and/or a configuring the function units to perform an automation process.

Accordingly, one or more functions units may be instantiated based on the function unit file on the application layer of the control application and/or on the application layer of a peripheral device, such as a gateway or an industrial controller. As the case may such function unit files, e.g. describing the functionalities of the one or more IEDs, may be obtained by the process described herein or may otherwise be created, for example specified by an engineer, e.g., directly in the third modelling language. In any case the gateway (or another peripheral device) may also comprise an application capable of interpreting and/or instantiating a function unit, such as said MTP.

A gateway may be understood an IED containing an OPC/UA server, which services requests of its clients by forwarding requests to other servers through its IEC 61850 client. The Gateway optionally modifies the client requests or the server's response and sometimes it may serve the request without contacting the specified server, e.g. by maintaining a process image.

The interpretation and/or instantiation may comprise creating or instantiating one or more communication interfaces for accessing, by the control application, the information model in the function unit (file). The same may apply to the interpretation and/or instantiation by the peripheral device(s) which may comprise an application (on the application layer for doing the same).

The function unit file is thus interpretable by the control application, and describes one or more services the IED is capable of, and wherein the one or more services comprise the variables for controlling and/or monitoring of the IED. The control application may thus be capable of reading in the function unit, e.g., said MTP file, and is then able to interact with the associated IED.

In a further step S4, one or more communication interfaces, e.g., a server, may be instantiated for accessing, by the peripheral device, such as an industrial controller and/or a gateway, the information model in the function unit. For this purpose, the function unit contains the (OPC UA) information model that is relevant for access and interaction, such as server end points and NodelDs. With this information, the control application, such as said POL, and/or an application on the peripheral device is able to connect to the IED. Such interpretation may comprise any one or more of the following: reading, parsing, information extraction, and/or performing one or more action in relation to the automation, i.e. monitoring and/or controlling of the IED. Thus, the IED may be controlled and/or monitored based on the one or more instantiations of the function unit in the control application and/or the peripheral device. The gateway is thus configured using a function unit file, e.g. according to the mapping process.

A function unit (file), such as MTP object, for an IED can be easily generated and reused in different control systems. The function unit can be easily instantiated (vertically or horizontally) in different layers of the RAMI 4.0 structure, e.g., on a gateway or an industrial controller such as a programmable logic controller.

Said one or more steps as described herein may be performed by an engineering tool, i.e., a computer program, operative to perform the method steps described herein. The method steps may be performed by an apparatus, preferably comprising the computer program. The apparatus is thus operative to perform the method steps described herein. Hence, a system comprising a control program and/or one or more peripheral devices comprising a function unit configured based on a function unit file, e.g., obtained as described herein or otherwise, is proposed, preferably for controlling and/or monitoring one or more IEDs.

As shown in Figure 15 in industrial plants, powers system equipment, such as medium-voltage power supply switchgear, must be integrated in the overall process automation system. Power Control Integration Services enable the homogeneous integration of electrical switchgear featuring devices for protection and control functions, i.e. said intelligent electronic devices, IEDs, in the process control system, such as SIMATIC PCS 7, based on the IEC 61850 standard. Hence, the combination of substation automation, comprising said one or more IEDs, and process automation in a single control system is envisioned, as, e.g., described herein. This significantly increases the entire plant's degree of integration since thereby it is necessary to integrate the operation and monitoring of the process, e.g., by field devices, drives, motors, and/or switches, and the operation and monitoring of the energy and/or power supply, e.g., by the one or more IEDs. Integration functions or services as described herein thus envisage to combine process automation with the automation of power system equipment, such as said electrical switchgear for medium voltage, in a single and/or uniform control system. Such integration simplifies the control and/or automation systems structures and provides more transparency, it thus increases the control and/or automation systems degree of integration

As described herein a gateway enables the direct integration of up to IEC 61850-compatible devices in the control application and/or the control system. Communication between the control application and IEDs may thus take place via the gateway. To increase availability, the gateway can also be used in a redundant configuration. One or more libraries, comprising e.g., said templates, can also be used for the consistent, end-to-end integration of IEDs all the way to the operator station. IEC 61850-compatible libraries thus enable a direct communication between a control application or an industrial controller and the IEDs.

## Claims

1. A method of integrating an intelligent electronic device (1), IED, controlling a power system equipment (2), such as a circuit breaker, a transformer, and/or a capacitor bank, into a control application (3) on an application layer of a control system (4), the method comprising the steps of:
determining a template (7) from a plurality of function unit templates (5) based on a configuration of the IED in a first modelling language, wherein the function unit templates (5) represent different types of IEDs and comprise variables for controlling and/or monitoring of a respective IED type in the form of one or more services, and
wherein the template (7) encapsulates template elements representing an application layer information model of the respective IED type in a second modelling language, and
filling the template based on the configuration of the IED by assigning values to the template elements based on the configuration, and
creating a function unit file (6) in a third modelling language based on the filled template (7), wherein the function unit file (6) is interpretable by the control application (3), and comprises the services encapsulated in said third modelling language.

2. The method according to the preceding claim, further comprising
integrating a function unit (8) for controlling and/or monitoring of the IED into the control application (3), preferably based on the function unit file (6).

3. The method according to any one of the preceding claims, further comprising
the function unit file (6) describing access to the IED, e.g., one or more communication protocols and/or interface methods to be used by the control application (3).

4. The method according to any one of the preceding claims, further comprising
the function unit file (6) describing one or more services the IED is capable of, and wherein the one or more services comprise the variables for controlling and/or monitoring of the IED (1).

5. The method according to any one of the preceding claims, further comprising
obtaining a configuration file (9), e.g., an SCL file, of said IED in the first modelling language.

6. The method according to any one of the preceding claims, further comprising
hosting by the control application (3) one or more other functions units (8) and, e.g., operating an automation system by, interconnecting the function unit (8) to the other function units.

7. The method according to any one of the preceding claims,
integrating the function unit (8) in the control application (3) by generating one or more interfaces for accessing the data model in the function unit and/or a configuring the function units to perform an automation process.

8. The method according to any one of the preceding claims,
instantiating one or more functions units (8) based on the function unit file (6) on the application layer of the control application (3) and/or on the application layer of a peripheral device (10), such as a gateway (11) or an industrial controller (12).

9. The method according to any one of the preceding claims,
instantiating one or more communication interfaces for accessing, by the control application (3), the information model in the function unit (file).

10. The method according to any one of the preceding claims,
wherein the function unit file (6) is interpretable by the control application (3), and describes one or more services the IED (1) is capable of, and wherein the one or more services comprise the variables for controlling and/or monitoring of the IED (1).

11. The method according to any one of the preceding claims,
instantiating one or more communication interfaces, e.g., a server, for accessing, by the peripheral device (10), such as an industrial controller (12) and/or a gateway (11), the information model in the function unit.

12. The method according to any one of the preceding claims,
controlling and/or monitoring the IED (1) based on the one or more instantiations of the function unit in the control application and/or the peripheral device.

13. A computer program, e.g., an engineering tool (13), operative to perform the method steps of any one of the preceding claims.

14. An apparatus (10, 11, 12, 13), preferably comprising the computer program according to the preceding claim, operative to perform the method steps of any one of the claims 1 to 12.

15. A system (4), e.g. a control system, comprising a control program (3) and/or one or more peripheral devices (10, 11, 12) comprising a function unit configured based on a function unit file (6) obtained by way of any one of the claims 1 to 12, preferably for controlling and/or monitoring one or more IEDs (1).
